# EUROPEAN PATENT APPLICATION

(11) **EP 3 771 342 A1**
(43) Date of publication of application: **03.02.2021**
(21) Application number: 19382663.3
(22) Date of filing: 31.07.2019
(51) Int. Cl.: A23C 9/152, A23C 9/156, A23C 9/158, A23C 11/04

(54) **A DRINKABLE DAIRY PRODUCT FOR PREGNANT AND LACTATING WOMEN**

(71) Applicant: Lactalis Puleva, S.L., 18004 Granada (ES)
(72) Inventor: LARA VILLOSLADA, Federico, 18004 GRANADA (ES); MALO POYATOS, Juan, Antonio, 18004 GRANADA (ES); GONZÁLEZ RODRIGUEZ, Sara, 18004 GRANADA (ES); OCHOA HERRERA, Julio, 18016 ARMILLA (Granada) (ES); KAJARABILLE GARCÍA, Naroa, 18016 ARMILLA (Granada) (ES); PEÑA CABALLERO, Manuela, 18014 GRANADA (ES); HURTADO SUAZO, Jose, Antonio, 18014 GRANADA (ES); PEÑA QUINTANA, Luis, 35001 LAS PALMAS DE GRAN CANARIA. (ES); RODRÍGUEZ-SANTANA, Yessica, 35001 LAS PALMAS DE GRAN CANARIA (ES)
(74) Representative: Herrero & Asociados, S.L.

(57) **Abstract**

The present invention refers to a drinkable dairy product which is stable at room temperature and provides all the nutritional supplements that women need before (pre-conception period) and during pregnancy as well as during lactation. The invention also refers to a process for the preparation of such drinkable dairy product as well as to the use thereof as nutritional supplement for women during the periods of pre-conception, pregnancy and lactation.

## Description

### FIELD OF THE INVENTION

The present invention belongs to the field of nutritional supplementation for women during periods of pre-conception, pregnancy and lactation. More particularly, the present invention refers to a drinkable dairy product which is stable at room temperature and provides the nutritional supplements that women need before (pre-conception period) and during pregnancy as well as during lactation. The invention also refers to a process for the preparation of such drinkable dairy product as well as to the use thereof as nutritional supplement for women during the periods of pre-conception, pregnancy and lactation.

### BACKGROUND OF THE INVENTION

It is not a secret that a good nutrition during pregnancy is critical for the proper and normal development of the baby. It is also well known that during pregnancy and lactation women have special nutritional needs that must be satisfied with a balanced diet and generally with the use of nutritional supplements. Nutritional supplements are aimed in providing the daily recommended amounts of those nutrients which are of special relevance during pregnancy and lactation, but which are difficult to obtain through the diet. In other words, nutritional supplements are a way of safeguarding the correct intake of essential nutritional elements in order to minimize the risk or impact that an incorrect nutrition or malnutrition may have in the normal development of the baby.

Nutritional supplements contain elements like folic acid, iodine, polyunsaturated fatty acids (PUFAs) like docosahexanoic acid (DHA) or eicosapentanoic acid (EPA), vitamins and other minerals like calcium, magnesium and phosphorous.

Folic acid is known to be very relevant in the correct development of CNS of the baby. Deficiencies in folic acid during pregnancy have been related with defects in the neural tube but also with cardiac problems. In fact, today it is a normal practice that women planning to get pregnant take folic acid supplements at least a month before pregnancy as well as during pregnancy.

Iodine is an essential micronutrient that must be regularly administered through the diet. However, iodine is especially relevant in pregnant women as it has been demonstrated that iodine supplementation during pregnancy reduces mortality of newborns, decreases the incidence of cretinism and improves the psychomotricity. It is therefore also recommended that women supplement their nutrition with iodine during preconception and during the whole pregnancy period.

PUFAs, such as DHA and EPA have also shown to have beneficial effects for foetal development. There are actually strong evidences that mothers with higher PUFAs intake during pregnancy have lower risk of preterm delivery and low birth weight.

Other common nutrients present in supplements for pregnant and lactating women are vitamins and minerals like calcium, magnesium or phosphorous.

The problem with this type of supplements is that they are generally in the form of pills, capsules or tablets, which are sometimes difficult to swallow, and they use to have bad flavour/odour. It is usual, moreover, that the treatment comprises the combination of several pills, capsules or tablets for a complete supplementation. In addition, users have sometimes the feeling that they are having medicaments what makes some consumers reluctant to this type of supplements. Last but not least, this unfriendly and unpleasant way of having the supplements makes some consumers losing adhesion to the treatment which is something not desirable.

In order to solve the above-mentioned problems, different attempts have been made to administer essential nutrients to pregnant women in different forms or formats to make such administration friendlier, more comfortable and pleasant as well as more effective. The most common approach has been to introduce the essential nutrients in different foodstuffs and drinks as vehicles for their delivery. This strategy makes supplementation of certain essential nutrients more effective as it is easier for the consumer gaining adhesion to the treatment by having a pleasant experience by the use of edible or drinkable products. US20030108594 for instance disclose food bars containing nutritional supplements for pregnant women.

In this line, another attempt to administer essential nutrients to pregnant women has been by their incorporation in dairy products. Documents CN103039605, CN1672541 or CN102488011, they all teach modified milks in powder form suitable for women during pregnancy period. Milk products in powder form are much more stable than liquid products that tend to be less stable and that need to be stored under refrigerating conditions. Powder products however have the disadvantage that they have to be reconstituted in water and are not useful as a ready-to-use product that may be transported and consumed at will by the user and in every circumstance. Furthermore, powder dairy products when reconstituted have not the same taste of liquid products, since they tend to have a sandy taste that it is normally not well accepted by consumers.

There are also described in the prior art some milk formulations in liquid for pregnant women such as for instance CN101322511, CN102379345 and CN101433240. These formulations although supplemented with some essentials nutrients for pregnant women still lack some important nutrients or elements for covering the nutritional needs of this population. Moreover, as explained before these documents do not appear to provide any solution to the stability issues that are usual in this kind of liquid formulations.

The authors of the present invention have, nevertheless developed a drinkable dairy product for pregnant and lactating women that overcome all the above-mentioned problems. In particular, the drinkable dairy product of the invention is suitable for the intake of the daily-recommended amounts of most of the necessary essential nutrients for this population. In particular, the product of the invention contains at least the daily-recommended amounts of folic acid, iodine, ω-3 PUFAs and a stabilized mix of vitamins essential for the normal development of the foetus during pregnancy. In addition, the product of the invention is extremely stable even at room temperature. The product of the invention has therefore the advantage that it does not need refrigeration and can be transported and consumed at any moment.

### OBJECT OF THE INVENTION

The main object of the invention is a drinkable dairy product for pregnant and lactating women that is stable at room temperature and that comprises:
a) a dairy base of milk and water stabilized with one or more calcium scavengers and one or more polyols;
b) a stabilized mixture of emulsified fatty acids comprising ω-3 PUFAs;
c) folic acid or folate;
d) iodine;
e) a stabilized mix of vitamins
wherein the drinkable product is contained in a thermoplastic container with a barrier against oxygen and light.

It is also an object the process for the preparation of the drinkable dairy product of the invention comprising:
a) the addition to a dairy base of milk and water of one or more calcium scavengers in order to stabilize caseins and one or more polyols in order to stabilize α-lactoalbulmin and β-lactoglobulin;
b) the incorporation to the stabilized dairy base of a) a concentrated solution of one or more emulsifiers with high HLB value, followed by the addition of premixture of MUFAs, ω-3 PUFAs and one or more lipidic antioxidants;
c) the addition of the folic acid or folate, the iodine and the stabilized mix of vitamins
the conditioning of the product in a thermoplastic container with a barrier against oxygen and light.

Finally, it is an object the use of the drinkable dairy product of the invention as a nutritional supplement for women during the periods of pre-conception, pregnancy and lactation.

### BRIEF DESCRIPTION OF THE FIGURES

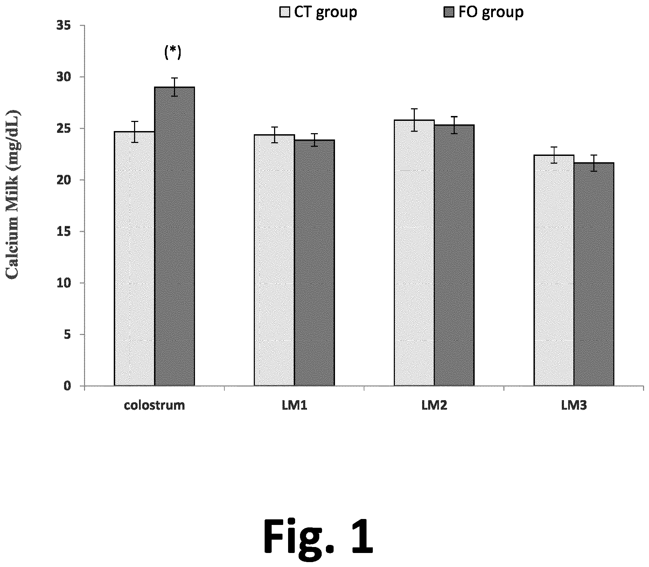

**Figure 1****:** represents the calcium levels in the milk of lactating mothers in colostrum, in the first month of lactation (1LM), in second month of lactation (2LM) and in third month of lactation (3LM) for mothers whose nutrition during pregnancy and lactation was supplemented with a dairy drink enriched in ω3-PUFAs (FO group) versus control group of mothers not having received such nutritional supplementation (CT group).

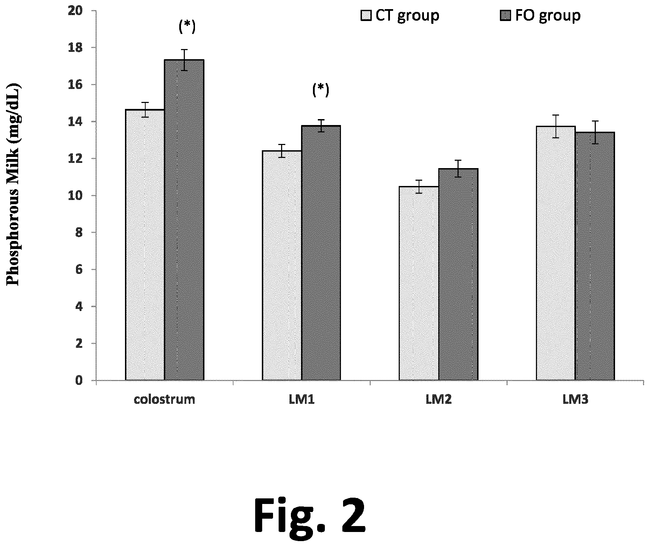

**Figure 2****:** represents the phosphorous levels in the milk of lactating mothers in colostrum, in the first month of lactation (1LM), in second month of lactation (2LM) and in third month of lactation (3LM) for mothers whose nutrition during pregnancy and lactation was supplemented with a dairy drink enriched in ω3-PUFAs (FO group) versus control group of mothers not having received such nutritional supplementation (CT group).

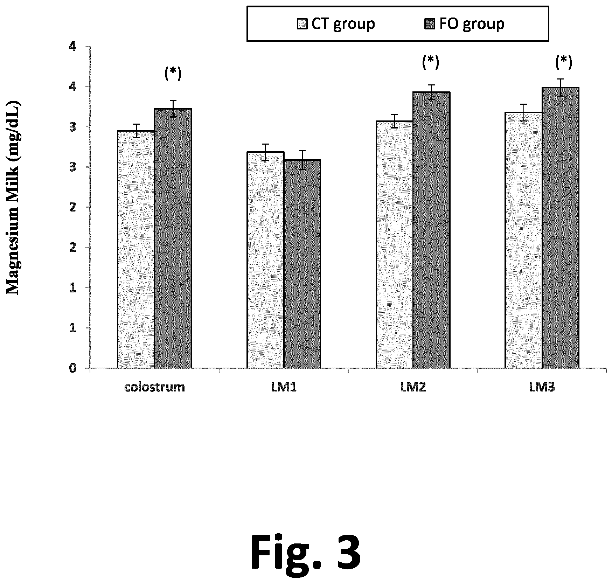

**Figure 3****:** represents the magnesium levels in the milk of lactating mothers in colostrum, in the first month of lactation (1LM), in second month of lactation (2LM) and in third month of lactation (3LM) for mothers whose nutrition during pregnancy and lactation was supplemented with a dairy drink enriched in ω3-PUFAs (FO group) versus control group of mothers not having received such nutritional supplementation (CT group).

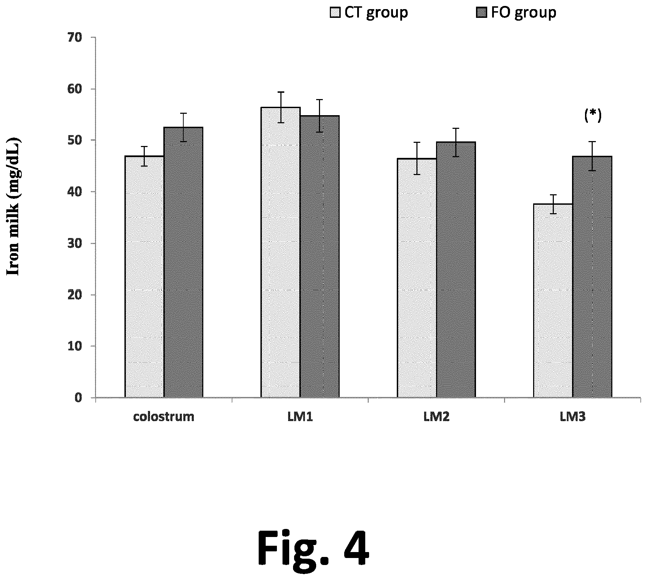

**Figure 4****:** represents the iron levels in the milk of lactating mothers in colostrum, in the first month of lactation (1LM), in second month of lactation (2LM) and in third month of lactation (3LM) for mothers whose nutrition during pregnancy and lactation was supplemented with a dairy drink enriched in ω3-PUFAs (FO group) versus control group of mothers not having received such nutritional supplementation (CT group).

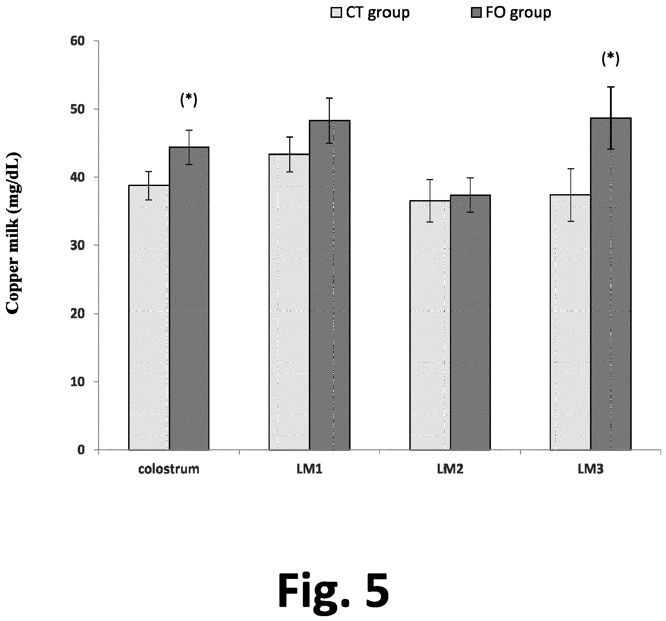

**Figure 5****:** represents the copper levels in the milk of lactating mothers in colostrum, in the first month of lactation (1LM), in second month of lactation (2LM) and in third month of lactation (3LM) for mothers whose nutrition during pregnancy and lactation was supplemented with a dairy drink enriched in ω3-PUFAs (FO group) versus control group of mothers not having received such nutritional supplementation (CT group).

### DESCRIPTION OF THE INVENTION

The main aspect of the present invention is a drinkable dairy product containing all the essential nutrients for women during the periods of pre-conception, pregnancy and lactation which thanks to the technology and process used in its preparation gives a product highly stable even at room temperature.

For the sake of a better understanding and interpretation of the invention, some definitions are herein provided:
**"Drinkable product":** It refers to a product which is in liquid form and which is aimed to be consumed in a drinkable form.
**"Dairy product":** It refers to a product which is partly or fully derived from milk of a mammal such as goat, sheep, yak or cow, and which can be subjected to any kind of thermal treatment/heat treatment such a pasterization or sterilization process. A dairy product according to the invention may also be subjected to a fermentation process. In the context of the invention dairy product refers to a drinkable dairy product.
**"Pregnant and lactating women":** it refers to the population that embraces women during periods of pre-conception, pregnancy and lactation.
**"Stable at room temperature":** in the context of the present invention it refers to a dairy product which does not need refrigerating conditions for maintaining its nutritional value, structure, texture, taste or other organoleptic properties. Stable at room temperature means that the product keeps unaltered for a period of at least 4 months at a mean temperature of about 25°C.
**"Dairy base":** in the context of the invention it refers to the dairy fraction or part of the drinkable product where the other nutritional fractions, elements or components are incorporated. The dairy base can be milk in liquid state or a water-reconstituted powder milk.
**"Milk":** it embraces any type of milk such as raw milk, whole milk, skimmed milk, semi-skimmed milk, lactose free milk either in liquid or powder form.
**"Raw milk":** is milk that has not been submitted to any heat treatment such as pasteurization or sterilization.
**"Whole milk":** is milk that has a fat content of at least 3.5% (w/w).
**"Skimmed milk":** is milk that has been submitted to a skimming process up to a final fat content below 0.5% (w/w).
**"Semi-skimmed milk":** is milk that has been submitted to a skimming process up to a final fat content between 1.5 and 1,8% (w/w).
**"Lactose free milk":** is milk whose lactose has been removed or hydrolysed up to a final lactose content of 0.01% (w/w).
**"Calcium scavengers":** it refers to any substance or compound which is capable of removing calcium ions from the aqueous medium. In the context of the present invention any physiologically acceptable substance or compound with capacity for scavenging calcium ions can be used such as for instance monosodium phosphate, disodium phosphate, trisodium phosphate, monopotassium phosphate, dipotassium phosphate, tripostassium phosphate, sodium or potassium citrates or mixtures thereof. In a preferred embodiment of the calcium scavenger used are sodium phosphates, such as monosodium phosphate, disodium phosphate of trisodium phosphate, more preferably disodium phosphate.
**"Polyols":** these are physiologically acceptable molecules containing two or more hydroxy group and which in the context of the present invention contribute to the stabilization of the whey proteins. In the context of the present invention, polyols can be sugars such as inulin, sucrose, eritritiol, xylitol, sorbitol, inositol or mixtures thereof. In a preferred embodiment the polyols are a mixture of inulin and sucrose.
**"Stabilized mixture of emulsified fatty acids":** In the context of the invention if refers to a mixture of different type of fatty acids including MUFAs and ω-3 PUFAs which are made stable and resistant to oxidation by means of being subjected to a water in oil emulsion with specific emulsifiers, preferably emulsifiers with high HLB value, and in the presence of antioxidants, preferably lipidic antioxidants.
**"ω-3 PUFAs":** it refers to long or very long chain polyunsaturated fatty acids. In the context of the invention it refers mainly to docosahexanoic acid (DHA), eicosapentanoic acid (EPA) or mixtures thereof. Preferably, it refers to mixtures of DHA and EPA.
**"Stabilized mix of vitamins":** in the context of the present invention it refers to a mixture of several vitamins comprising at least one or more of vitamin A, vitamin B1, vitamin B2, vitamin B3, vitamin B5, vitamin B6, vitamin B8, vitamin B9, vitamin B12, vitamin C, vitamin D, vitamin E and vitamin K, preferably all them, which are subjected to protection that prevents their oxidation by any suitable means. The stabilization of the premix of vitamins is preferably carried out by the use of a carrier such as lactose or maltodextrin or by the use of hydrosoluble antioxidants such as a salt of ascorbic acid (vitamin C) for instance sodium ascorbate. The preferred embodiment comprises the use of hydrosoluble antioxidants.
**"Thermoplastic container":** It is the recipient made of a thermoplastic material where the drinkable product is introduced for its delivery, transport and storage and subsequent consumption. It can be conformed into different shapes, preferably in the form of a bottle with closing means, and sizes but it must have a barrier against oxygen and light. In a preferred embodiment the thermoplastic container is made of Polyethylene terephthalate (PET).
**"Barrier against oxygen":** it refers to the physical o chemical means incorporated in the thermoplastic container to prevent to oxygen getting into contact with the drinkable product inside the container. The preferred barrier against oxygen comprises chemical means preferably barrier additives against oxygen introduced in the preparation of the thermoplastic container or the incorporation of a mixture of semi-aromatic polyamides and a suitable catalyser in the preparation of the thermoplastic container.
**"Barrier against light":** it refers to the physical o chemical means incorporated in the thermoplastic container to prevent to the negative effect of light on the drinkable product inside the container. The preferred chemical means against light comprises chemical barrier additives against light such as titanium dioxide. The preferred physical means against light comprises a two or three-layers-poliethylene terephthalate or an opaque sleeve covering the container.
**"Emulsifiers":** If refers to physiologically acceptable substances or compounds which facilitate emulsification in an oil in water or water in oil emulsions and that act as stabilizer for such emulsions, preventing liquids that ordinarily do not mix from separating.
**"Emulsifiers with high HLB value":** The HLB (hydrophilic-lipophilic balance) value is the degree to which the emulsifier is hydrophilic or lipofilic. The higher the HLB value the more hydrophilic is the emulsifier.
**"MUFAs":** it refers to long or very long-chain fatty acids having one single double bond or unsaturation in the carbon chain. In the context of the invention it refers mainly to Oleic acid.
**"Antioxidants":** it refers to substances or compounds with high capacity for reacting with oxygen reactive species capable thus preventing oxidation of other molecules.
**"Lipidic antioxidants":** It refers to antioxidant which are more tendent to dissolution in a lipidic medium.
**"Non-lipidic antioxidants":** it refers to antioxidant which are more tendent to dissolution in an aqueous medium. They can also be referred as hydrosoluble antioxidants.
**"E471":** it is an emulsifier composed of mono- and diglycerides fatty acids.
**"E472":** it is an emulsifier composed of mono- and diglycerides of fatty acid esters.
**"E472c":** it is an emulsifier composed of mono- and diglycerides of fatty acid citric esters.
**"Casein":** it is the main protein present in mammal's milk.
**"a-lactoalbulmin":** it is one specific protein present in the whey fraction of milk.
**"P-lactoglobulin":** it is one specific protein present in the whey fraction of milk.

### Drinkable dairy product

Thus, as explained above, the main aspect of the invention is a drinkable dairy product for pregnant and lactating women that is stable at room temperature and that comprises:
a) a dairy base of milk and water stabilized with one or more calcium scavengers and one or more polyols;
b) a stabilized mixture of emulsified fatty acids comprising ω-3 PUFAs;
c) folic acid or folate;
d) iodine;
e) a stabilized mix of vitamins
wherein the drinkable product is contained in a thermoplastic container with a barrier against oxygen and light.

The first and more important element of the product of the invention is the dairy base of milk. Since the product is a drinkable product, the dairy based is always in water. The milk nevertheless can be liquid in origin (pure milk) or it can be a milk in powder form reconstituted in water or any kind of milk with added water.

The protein stability of a dairy base in water always represents a technical problem in supplemented dairy products. There are mainly two types of protein that must be stabilized, the caseins and the whey protein of milk.

The addition of external elements to the dairy base interferes importantly into caseins which although being thermoresistant are very sensitive to the ionic medium because of their micelar state. Casein micelles have an external electric charge that in the typical range of pH in milk (6.7-6.8) is negative, causing the repulsion of the micelles thus avoiding aggregation.

For instance, the addition of high levels of vitamins and particularly of folic acid or folate as in the product of the present invention, leads to a decrease of the pH that may result in destabilization of casein in the final product. Also, although a base of pure milk is more stable, the addition of water to the dairy base results in protein instability since the addition of water changes the saline balance. Added water changes the saline balance because it has higher hardness by a higher presence of calcium salts and ionic calcium which cause aggregation of caseins.

The problem of stability of caseins in the dairy base is solved in the present invention by the use of calcium scavengers. These are substances or compounds which are capable of removing calcium ions from the aqueous medium. In the context of the invention calcium scavengers can be any substance capable of removing calcium ions from the aqueous medium but at the same time being edible substances authorized as food excipients. In a particular embodiment, calcium scavengers can be monosodium phosphate, disodium phosphate, trisodium phosphate, monopotassium phosphate, dipotassium phosphate, tripostassium phosphate, sodium or potassium citrates or mixtures thereof.

In a particular and preferred embodiment of the invention the calcium scavengers are sodium phosphate salts and more preferably disodium phosphate. The effect of disodium phosphate is that it exchanges its two sodium ions by one calcium ion from the environment (common ion effect). Disodium phosphate and monocalcium phosphate have a different solubility that is evidenced in their different solubility product constant (Kps). Disodium phosphate has moderate solubility in water whereas monocalcium phosphate is practically insoluble. In a solution where both salts are dissolved, the common ion will tend to form the more insoluble salt, so the addition of disodium phosphate to the milk will form monocalcium phosphate. The monocalcium phosphate remains in suspension but it has the effect of scavenging the calcium ions thus contributing to avoid aggregation of caseins and maintaining the stability thereof.

Optionally, apart from the common ion effect achieved by the use of the calcium scavengers, and just in case the pH has decreased too much (to about 6.6 or less) this can be increased by the addition of an alkali to the typical dairy pH of 6.7-6.8. The alkali must be physiologically acceptable. In a particular embodiment it can be for instance a bicarbonate, preferably a disodium or dipotassium bicarbonate.

The other protein to be stabilized are whey-proteins. These are mainly formed by α-lactoalbumin and β-lactoglobulin which are thermosensitive and so must be stabilized to resist the typical temperatures of the UHT treatment. In the product of the invention, whey proteins stabilization is achieved by means of polyols such as inulin, sucrose, eritritiol, xylitol, sorbitol, inositol or mixtures thereof. It is not clear what is the mechanism leading to such protection but the inventors, without wishing to be bound to any theory, believe that the stabilization effect is due to the hydration sphere of the proteins and the establishment of hydrogen bonds from the hydroxyl groups of these polyols.

In a preferred embodiment of the invention, the polyols used for stabilization of whey proteins comprises the combination of inulin and sucrose having the following structure:

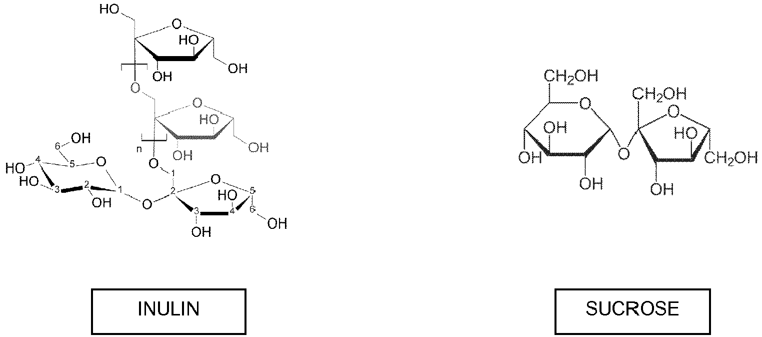

Sucrose is a disaccharide formed by glucose and fructose which due to its abundant hydroxyl groups contributes to stabilization of whey proteins.

In turn, inulin is a family of complex saccharides formed by molecular chains of fructose, so chemically they are fructans. There are a high proportion of hydroxyl groups so their contribution to protein stability is very relevant. But apart from its stabilizing effect, inulin has additional benefits to pregnant women who usually suffer of constipation during pregnancy period. Inulin is a fiber that is highly effective in accelerating intestinal transit. Therefore, the drinkable product of the invention has a beneficial effect in preventing constipation during pregnancy.

Another relevant type of nutrient in the drinkable dairy product of the invention are ω-3 PUFAs. Incorporation of ω-3 PUFAs has two relevant technical problem. The first one is related to its incorporation in high proportion within the aqueous matrix of the product and its stability against oxidation. The second one is related to its taste, since ω-3 PUFAs commonly have a fish origin and tend to provide an undesirable fishy taste.

These problems are solved by a stabilized mixture of emulsified fatty acids comprising ω-3 PUFAs which on the one hand, allows the incorporation in high proportion of ω-3 PUFAs in the drinkable product in a homogeneous and stable manner, as well as, their protection against oxidation and rancidity. On the other hand, the emulsified mixture of fatty acid protects against the fishy taste of ω-3 PUFAs. In a preferred embodiment, the ω-3 PUFAs used in the drinkable product of the invention are DHA, EPA or a mixture thereof.

In a particular embodiment of the invention, ω-3 PUFAs are present in an amount between 0.1 g and 0.5 g per 100 ml of dairy product, preferably between 0.12 g and 0.4 g per 100 ml of dairy product.

The stabilized mixture of fatty acids comprising ω-3 PUFAs is emulsified in order to be incorporated in the aqueous medium. Said emulsion comprises at least emulsifiers, MUFAs, ω-3 PUFAs and at least one antioxidant to prevent rancidity. But in order for the ω-3 PUFAs to be incorporated in the dairy base in high proportion, to minimize their oxidation and to effectively mask the fishy taste, the preparation of the oil in water emulsion is of relevance.

In a particularly preferred embodiment of the invention the stabilized mixture of emulsified fatty acids comprising ω-3 PUFAs preparation comprises a pre-processing of the dairy base by incorporating a concentrated solution of one or more emulsifiers with high HLB value, followed by the addition of premixture of MUFAs, ω-3 PUFAs and one or more antioxidants.

In a particular and preferred embodiment of the invention, the emulsifiers with high HLB value are selected from a mixture of E472c and a lecithin with high HLB value, preferably without bitter off-flavour, or any other E472 or E471 or mixtures thereof.

Regarding the antioxidants used in the preparation of the emulsion these are selected from lipidic antioxidants preferably tocopherols, lecithins, ascorbyl palmitate; or non-lipidic antioxidants preferably ascorbic acid, sodium ascorbate; or mixtures of lipidic and non-lipidic antioxidants.

Another essential nutrient incorporated in the drinkable dairy product of the invention is folic acid or folate. This must be present in the product in the daily recommended amount for pregnant women. In a particular embodiment, folic acid or folate is present in an amount between 350µg to 550µg per 100 ml of dairy product, preferably between 375µg to 450µg per 100 ml of dairy product.

Iodine is also an essential nutrient in the drinkable dairy product of the invention which is also present in the daily recommended amount for pregnant women. In a particular embodiment of the invention iodine is present in an amount between 150µg to 350µg per 100 ml of dairy product, preferably between 175µg to 250µg per 100 ml of dairy product.

The last essential group of nutrients of the drinkable product of the invention is represented by the stabilized mixture of vitamins. The stabilized mix of vitamins comprise one or more of vitamin A, vitamin B1, vitamin B2, vitamin B3, vitamin B5, vitamin B6, vitamin B8, vitamin B9, vitamin B12, vitamin C, vitamin D, vitamin E and vitamin K.

Vitamins need also to be stabilized. Some vitamins are more sensible to degradation than others but all of them have to be conserved and its degradation must be prevented until the end of the shelf-life of the dairy drinkable product. Protection and stabilization of the mixture of vitamins can be done in different ways either by combination of the premix of vitamins with a carrier or by the use of hydrosoluble antioxidants. In a particular embodiment of the invention the mix of vitamins are stabilized by means of a carrier preferably lactose or maltodextrin or by a hydrosoluble antioxidant, preferably a salt of ascorbic acid (vitamin C) for instance sodium ascorbate. In the case of using a salt of ascorbic acid this is used in relatively high amounts since oxidative agents act first against it thanks to its strong antioxidant potential protecting the rest of vitamins from degradation. On the other hand, since vitamin C is hydrosoluble there is no risk of accumulation in the body as the excess not used is excreted in the urine.

In a particular embodiment of the invention the stabilized mix of vitamins can comprise one or more of the following vitamins in the following amounts:
- vitamin A between 100 µg to 300 µg per 100 ml, preferably
- vitamin B1 between 1 mg to 2 mg per 100 ml,
- vitamin B2 between 0.2 mg to 0.8 mg per 100 ml,
- vitamin B3 between 4 mg to 10 mg per 100 ml,
- vitamin B5 between 0.5 mg to 1.5 mg per 100 ml,
- vitamin B6 between 1 mg to 3 mg per 100 ml,
- vitamin B8 between 20 µg to 70 µg per 100 ml,
- vitamin B12 between 0.1 µg to 0.55 µg per 100 ml,
- vitamin C between 60 mg to 180 mg per 100 ml,
- vitamin D between 2 µg to 8 µg per 100 ml,
- vitamin E between 9 mg to 15 mg per 100 ml,
- vitamin K between 50 µg to 160 µg per 100 ml.

Apart from all the above essential nutrients, the drinkable dairy product of the invention can optionally comprise further nutrients including calcium, magnesium or phosphorous. In a particular embodiment the product of the invention comprises all these three nutrients, namely calcium, magnesium or phosphorous

In a particular embodiment, the product of the invention comprises calcium in an amount between 200 mg to 400 mg per 100 ml of dairy product, preferably between 250 mg and 350 mg per 100 ml of dairy product.

In a further particular embodiment, the product of the invention comprises magnesium in an amount between 30 mg to 80 mg per 100 ml of dairy product, preferably between 40 mg and 70 mg per 100 ml of dairy product.

In a still additional particular embodiment, the product of the invention comprises phosphorous in an amount between 100 mg to 300 mg per 100 ml of dairy product, preferably between 150 mg and 200 mg per 100 ml of dairy product.

The last element of the invention that contributes in an essential manner to the extremely high stability, even at room temperature is connected to the package or container in which the drinkable product is contained. Normally, the container of the invention is to be conformed as a bottle that may have different shapes and volumes.

The container in the product of the invention is a thermoplastic container with a barrier against oxygen and light. The barrier may be of physical or chemical nature.

In a particular and preferred embodiment of the invention, the thermoplastic container is made of polyethylene terephthalate.

In a particular and preferred embodiment, the barrier against oxygen comprises barrier additives against oxygen selected from antioxidants or a mixture of semi-aromatic polyamides plus one catalyser.

In another particular and preferred embodiment of the invention the barrier against light comprises chemical barrier additives against light, like titanium dioxide or a physical barrier against light formed by a two layers-poliethylene terephthalate or a three layers-poliethylene terephthalate or a by transparent container with an opaque sleeve.

All the above described technical features give rise to a long-lasting product that is stable at room temperature without needing any refrigeration. As it is well known, cold temperature slows down oxidative reactions, and this is the reason why dairy products with a complex composition such as the product of the invention are normally stored at temperatures below 10°C and their expiring date is not usually longer than 40 days. On the contrary, due to the protective composition as well as to the container used, the drinkable dairy product of the invention can be stored at room temperature and preserves the sensorial profile up to 4 months. This allows a ready-to-use product that the consumer can bring with him and take it at any time during the day.

The product of the invention has the usual taste of milk, but it can be optionally designed to have the taste of classical milkshakes. In that sense, the drinkable product can be prepared to have different flavours such as cocoa, vanilla or strawberry to increase the satisfaction of consumers.

### Process for the preparation of the drinkable product of the invention

Another aspect is related to a process for the preparation of the drinkable dairy product of the invention that comprises:
a) the addition to a dairy base of milk and water of one or more calcium scavengers in order to stabilize caseins and one or more polyols in order to stabilize whey proteins, including α-lactoalbulmin and β-lactoglobulin;
b) the incorporation into the stabilized dairy base of a) of a concentrated solution of one or more emulsifiers with high HLB value, followed by the addition of premixture of MUFAs, ω-3 PUFAs and one or more antioxidants, preferably lipidic antioxidants;
c) the addition of the folic acid or folate, the iodine and the stabilized mix of vitamins;
d) the conditioning of the product in sterile conditions in a thermoplastic container with a barrier against oxygen and light.

The first step for the process is directed to the protein stabilization of the dairy base in water. In this sense, the calcium scavengers and polyols are added sequentially and homogenized within the dairy base.

In a particular embodiment, the calcium scavengers used are selected from monosodium phosphate, disodium phosphate, trisodium phosphate, monopotassium phosphate, dipotassium phosphate, tripostassium phosphate, sodium or potassium citrates or mixtures thereof. In the preferred embodiment, the calcium scavengers used in the process are sodium phosphate salts and more preferably disodium phosphate.

Moreover, in a particular embodiment, stabilization of whey proteins is carried out by polyols selected from inulin, sucrose, eritritol, xilitol, sorbitol, inositol or mixtures thereof: in the preferred embodiment polyols the polyols used are a mixture of inulin and sucrose.

Step b) of the process of the invention is critical for a correct incorporation of a high proportion ω-3 PUFAs into the dairy base and to safeguard their resistance to oxidation. In a preferred embodiment, the incorporated ω-3 PUFAs are DHA and EPA.

The way in which the ω-3 PUFAs is processed in this step of the process is also essential in achieving the effect of the removal of the fishy taste of ω-3 PUFAs from the final product. In that sense, the solution of emulsifiers with high HLB value is prepared beforehand as a concentrated aqueous solution, preferably with a careful control of temperature between 40 and 90 °C in order to liquefy the emulsifiers and allow a better mix with the oils and also a better incorporation of the mixture of emulsifiers and oils to the dairy base.

This solution is homogenously incorporated into the dairy base thus preparing the dairy base to receive the oils. In a particular embodiment, the emulsifiers used in the process are selected from a mixture of E472c and a lecithin with high HLB value, or from any other E472 or E471 or mixtures thereof. The preferred embodiment of the invention contemplates the use of a mixture of E472c and a lecithin with high HLB value.

For the incorporation of the oils with the ω-3 PUFAs, these have to be previously premixed with monounsaturated fatty acids (MUFAs) and one or more lipidic antioxidants. The MUFAs act as the main oil matrix that receives the ω-3 PUFAs and the lipidic antioxidants. In a preferred embodiment of the invention, the lipidic antioxidants are preferably tocopherols, lecithins, ascorbyl palmitate; or mixtures of these lipidic and non-lipidic antioxidants.

Then, the oil premix with the ω-3 PUFAs is incorporated homogenously into the dairy base using the preprocess equipment to ensure a good interaction between oils and emulsifiers, making an emulsion that prevents fat separation in the product during the shelf-life and protects the oils from oxidation. This antioxidant effect over the ω-3 PUFAs is achieved because of a triple meta-encapsulation that is carried out in the preparation process, that is:
- First meta-encapsulation by inclusion of ω-3 PUFAs in an environment of MUFAs
- Second meta-encapsulation by inclusion of the previous one in an environment of an innovative mix of emulsifiers.
- Third meta-encapsulation by inclusion of the previous one in an environment of saturated fatty acids as the dairy fat.

In order to help to the fat distribution into the dairy base a homogenization step at a pressure of 100 to 300 bars is preferably carried out in the process.

After incorporation of the oil phase with the ω-3 PUFAs, the folic acid or folate, the iodine and the stabilized mix of vitamins are incorporated homogenously into the dairy base.

Iodine and folic acid or folate do not need any particular preparation for being introduced in the drinkable product. However, the mixture of vitamins has to be stabilized in solution prior to its introduction into the dairy base. In this sense, the mixture of vitamins can be stabilized in a particular embodiment by means of a carrier such as lactose or maltodextrin or by hydrosoluble antioxidant. In the preferred embodiment of the invention, the stabilization of the mixture of vitamins is carried out by a hydrosoluble antioxidant more preferably by a salt of ascorbic acid.

After introducing the folate and the mixture of vitamins, the pH of the drinkable product may be decreased. Optionally, pH can be adjusted to 6.7-6.8 if necessary to maintain the stability of caseins. For adjusting the pH, a physiologically acceptable alkali can be used. In a preferred embodiment, it can be for instance a bicarbonate, preferably a disodium or dipotassium bicarbonate.

Also, optionally, in step c) calcium, phosphorous and magnesium salts can be added in the preparation of the drinkable product of the invention.

The last step comprises the conditioning of the product in the thermoplastic container with a barrier against oxygen and light. The conditioning comprises and includes the sterilization treatment to incorporate the product in the container in sterile conditions. Any kind of sterilization process which is commonly used in the dairy industry can be used for sterilizing purposes, although a UHT treatment is preferred. Sterilization can be done by direct steam injection or indirect heating and in the latter case can be done by plate exchangers or by tubular exchanges. After UHT treatment the product is conditioned in thermoplastic containers in sterile conditions.

The thermoplastic container as explained above is made in the preferred embodiment of the invention of polyethylene terephthalate, but it can be made of any other thermoplastic material suitable for containing drinkable product and which contains barriers against oxygen and light.

In a particular and preferred embodiment, the barrier against oxygen comprises barrier additives against oxygen selected from antioxidants or a mixture of semi-aromatic polyamides together with one catalyser.

In another particular and preferred embodiment of the invention the barrier against light comprises chemical barrier additives against light, like titanium dioxide or a physical barrier against light formed by two- or three-layered thermoplastic containers more preferably two layers-polyethylene terephthalate or a three layers-polyethylene terephthalate or a by transparent container with an opaque sleeve.

### Application of the drinkable dairy product

The last aspect of the present invention is related to the use of the drinkable dairy product of the invention as a nutritional supplement for women during the periods of pre-conception, pregnancy and lactation.

The drinkable dairy product of the invention contains the daily-recommended amounts of all the necessary essential nutrients for the population of pre-pregnant, pregnant and lactating women. In particular, the product of the invention contains at least the pregnancy daily-recommended amounts of folic acid, iodine, ω-3 PUFAs and a stabilized mix of vitamins essential for the normal development of the foetus during this period. In this sense the product of the invention, is safe and recommended for daily consumption. Its use is intended as substituent of all the different nutritional supplements that pregnant women and women that want to get pregnant have to take usually. In this sense, it is not only an all-in one solution for nutritional supplementation needs of this population but also a pleasant experience for the consumer that facilitates adhesion to the treatment of the same.

In addition, as surprisingly been shown that the consumption of a drinkable product with the high ω-3 PUFAs levels according to the invention during pregnancy results in a significant and beneficial change in breast-milk composition, such as an increase in calcium content..

The drinkable product of the invention is a ready-to-use product which is suitable to be consumed as part of any of the main meals of the day such as during breakfast, lunch or dinner or even in the hours between them. Actually, since the product of the invention is extremely stable at room temperature and does not need any type of refrigeration, it is especially suited to be transported by the consumer and drunk at any moment or in any circumstance.

The following examples are intended to illustrate and represent the invention but by no means are limitative of its scope:

### Example 1: production of the drinkable dairy product

First a premix of ingredients for a preprocessing stage y prepared, by mixing a protein stabilizer (disodium or dipotassium phosphate at a dosage between 0,05% and 0,1% w/w), and the texturizers (cellulose, carboxy methyl cellulose and/or carrageenan or a mixture of them at a dosage between 0,2% and 0,8% w/w) .

Then, the preprocess of the previous premix is carried out by addition of it into milk heated at a temperature between 60°C and 90 °C, followed by a homogenization step at a pressure between 60 bar and 150 bar, and cooling down of the mixture below 10 °C before incorporating it to the rest of the milk that is stored below 10 °C.

After that, a preparation of an aqueous mix of emulsifiers (E472, E471 and/or lecithin, at a dosage between 0,1% and 1% w/w) is carried out by dissolving them into hot water at a temperature between 60°C and 90 °C. Next, an injection of this preparation into milk heated at a temperature between 60°C and 90 °C is made, followed by a homogenization step at a pressure between 60 bar and 150 bar and cooling down of the mixture below 10 °C before incorporating it to the rest of the milk that is stored below 10 °C.

The next step is the preparation of the mix of oils (MUFA, PUFA-ω3, at a dosage between 0,3% and 0,7% w/w). This mix of oils could be heated to a temperature between 30 °C and 70 °C. Injection of this mix into milk heated at a temperature between 60°C and 90 °C, followed by a homogenization step at a pressure between 60 bar and 150 bar and cooling down of the mixture below 10 °C before incorporating it to the rest of the milk that is stored below 10 °C.

After incorporation of the oleic fraction, the addition of the remaining ingredients is performed by using a mixer (such a Triblender, Alvak, Minimix or similar) into cold milk:
calcium salts: in a dosage between 0,5% and 1,0% w/w
inulin: in a dosage between 3% and 4% w/w
alkali: in a dosage between 0,1% and 0,3% w/w
magnessium salts: in a dosage between 0,3% and 0,4% w/w
sugar: in a dosage between 1% and 2% w/w
vitamin mix: in a dosage between 0,2% and 0,4% w/w
edulcorants: in a total dosage between 0,015% and 0,025% w/w
potassium iodide: in a dosage between 0,002% and 0,005% w/w

Before its conditioning into a final container UHT treatment of the mix at a temperature between 140 °C and 150 °C, including an homogenization step at a pressure between 100 bar and 300 bar, and filling of the aseptic tank at a product temperature between 10°C and 30 °C is carried out.

In the last step of the procedure the final product y packaged in a PET thermoplastic plastic bottle with a chemical barrier to oxygen and/or light.

### Example 2: production of the drinkable flavoured dairy product

The preparation of the flavoured product is carried out as disclosed in the Example 1, however cocoa or coffee (in a dosage between 0,6% and 1,2% w/w) is added in the premix before of the preprocess stage. Alternatively, different flavours (such as cocoa, coffee, caramel, strawberry, vanilla or others) at a dosage between 0,05% and 1% w/w are added in the final addition into cold milk before the UHT treatment.

### Example 3: stability of the dairy product

Protein stability of the final product according to the Ramsdell test, was performed on the product of example 1. This test consists in the boiling of a sample of 10 ml in a test tube during 10 minutes, cooling down to room temperature and check the presence or absence of dots of coagulated protein. No dots of coagulated proteins were present in the tested samples. Moreover, no coagulated dots appeared in the product after 5 months of storage at room temperature.

On the other hand, the analysis of vitamins after 5 months showed no substantive variation with regard to the initial labelled content in the product. Thus, the vitamins within the product show a high degree of stability.

Regarding, the oleic fraction with MUFAs and ω3-PUFAS, the presence thereof is not altered after 5 month and neither alterations in the taste such as the presence of fishy taste are identified after this period of time.

In conclusion, the dairy product shows a high stability at least for 5 months.

### Example 4: organoleptic evaluation of the product

The product of example 1 was assessed after 5 months of shelf-life in its organoleptic properties. After 5 month the product was considered to have a suitable taste. This means that there were not any fishy off-flavour and there is a persistent sweetness. The creamy mouthfeel that reminds a milk-shake was perfectly maintained.

In the case of the product version containing other flavouring ingredients (cocoa, coffee, caramel, flavours or others), the product clearly maintained a distinguishable taste to each of them.

### Example 5: improvement of nutritional composition of milk in lactating mothers having consumed the milk product

The aim of the study was to elucidate the effect of a dairy drink enriched with ω-3 PUFAs during pregnancy and lactation on the production and quality of milk of the breast feeding mothers. 110 women were randomly assigned to the following intervention groups: control group CT (n=54), taking 400mL/day of the control dairy drink, and supplemented group FO (n=56), taking 400mL/day of the ω-3 PUFAs-enriched dairy drink (320mg DHA/day) from week 28th to end of breastfeeding. During all this period mothers' diet was controlled under the supervision of a nutritionist (300mg EPA+DHA/day).

The results of this study show an improvement in the quality of breast milk in nutritional terms. Table 1 below shows that the proportion of ω-3 PUFAs in the milk is clearly increased in the supplemented group (FO group) when compared to the control group. This increase is evident in the colostrum but also in milk until the fourth month.

**Table 1. Fatty acids composition in mother's milk.**

| | **Control Group** | **FO Group** |
|---|---|---|
| **Colostrum** | | |
| C18:1n-9 | 45.04 ± 4.41 | 45.56 ±10.76 |
| C18:2n-6 | 14.87 ± 2.88* | 16.85 ± 5.27 |
| C18:3n-3 | 0.63 ± 0.34 | 0.64 ± 0.43 |
| C24:1 n-9 | 0.85 ± 0.38* | 1.08 ± 0.52 |
| EPA | 0.12 ± 0.05* | 0.22 ± 0.13 |
| DHA" | 0.67 ± 0.29* | 1.03 ± 0.38 |
| SFA | 35.61 ± 3.93 | 35.77 ± 6.23 |
| MUFA | 47.65 ± 4.17 | 48.00 ± 10.42 |
| n-6 PUFA | 15.41 ± 4.04 | 16.84 ± 6.75 |
| n-3 PUFA | 1.58 ± 0.61 | 2.12 ± 0.84 |

| **1 month milk** | | |
|---|---|---|
| C18:1n9 | 40.80 ±8.03 | 41.54 ± 7.18 |
| C18:2n6 | 16.38 ± 3.92 | 15.99 ± 4.50 |
| C18:3n3 | 0.69 ± 0.33 | 0.64 ± 0.26 |
| C24:1 n-9 | 0.15 ± 0.07 | 0.14 ± 0.05 |
| EPA | 0.12 ± 0.09 | 0.18 ± 0.09 |
| DHA | 0.41 ± 0.17* | 0.67 ± 0.26 |
| SFA | 37.35 ± 9.31 | 36.50 ± 7.61 |
| MUFA | 42.80 ± 7.95 | 43.38 ± 7.19 |
| n-6 PUFA | 16.66 ± 4.91 | 16.99 ± 4.27 |
| n-3 PUFA | 1.29 ± 0.47* | 1.62 ± 0.58 |

| **2 months milk** | | |
|---|---|---|
| C18:1n9 | 45.16 ± 4.99 | 44.62 ± 5.90 |
| C18:2n6 | 14.53 ± 3.34 | 16.43 ± 4.70 |
| C18:3n3 | 0.63 ± 0.17 | 0.74 ± 0.33 |
| C24:1 n-9 | 0.15 ± 0.07* | 0.12 ± 0.08 |
| EPA | 0.11 ± 0.06* | 0.18 ± 0.09 |
| DHA | 0.37 ± 0.19* | 0.80 ± 0.33 |
| SFA | 36.56 ± 4.42 | 37.74 ± 10.97 |
| MUFA | 46.99 ± 4.90 | 42.98 ± 12.58 |
| n-6 PUFA | 15.22 ± 3.44* | 17.36 ± 4.44 |
| n-3 PUFA | 1.17 ± 0.32* | 1.79 ± 0.61 |

| **4 months milk** | | |
|---|---|---|
| C18:1n9 | 44.68 ± 6.14 | 45.25 ± 10.33 |
| C18:2n6 | 15.24 ± 3.37 | 14.98 ± 4.18 |
| C18:3n3 | 0.71 ± 0.29 | 0.67 ± 0.33 |
| C24:1 n-9 | 0.09 ± 0.05 | 0.09 ± 0.03 |
| EPA | 0.08 ± 0.04* | 0.17 ± 0.11 |
| DHA | 0.32 ± 0.15* | 0.65 ± 0.37 |
| SFA | 36.41 ± 7.14 | 37.26 ± 9.25 |
| MUFA | 46.58 ± 6.07 | 45.37 ± 7.91 |
| n-6 PUFA | 15.84 ± 3.37 | 15.12 ± 3.88 |

| | | |
|---|---|---|
| *Results are expressed as percentages (%) of total fatty acids determined. Values are means ± SD. Statistical Significances: (***) means statistically significant differences between groups (P<0,05).* | | |

The results also shows that:
a) The level of calcium is significantly increased in the colostrum of mothers of the FO group (figure 1.)
b) The level of phosphorous is significantly increased in the colostrum and at least until the 1-month milk for mothers of the FO group (see figure 2).
c) The level of magnesium is significantly increased in the colostrum and in 2 and 3-month milk for mothers of the FO group (see figure 3).
d) The level of iron is significantly increased in the colostrum and in 3-month milk for mothers of the FO group (see figure 4).
e) The level of copper is significantly increased in the colostrum and in 3-month milk for mothers of the FO group (see figure 5).

## Claims

1. A drinkable dairy product for pregnant and lactating women that is stable at room temperature and that comprises:
a) a dairy base of milk and water stabilized with one or more calcium scavengers and one or more polyols;
b) a stabilized mixture of emulsified fatty acids comprising ω-3 PUFAs;
c) folic acid or folate;
d) iodine;
e) a stabilized mix of vitamins
wherein the drinkable product is contained in a thermoplastic container with a barrier against oxygen and light.

2. A dairy product according to claim 1 where the milk is raw milk, whole milk, skimmed milk, semi-skimmed milk, lactose free milk or any of them in powder form.

3. A dairy product according to any of the previous claims where calcium scavengers are selected from sodium phosphates, potassium phosphates, diphosphates, triphosphates, citrates or mixtures thereof.

4. A dairy product according to any of the previous claims where the polyols are selected from inulin, sucrose, eritritol, xilitol, sorbitol, inositol or mixtures thereof.

5. A dairy product according to any of the previous claims where PUFAs are DHA, EPA or a mixture thereof.

6. A dairy product according to any of the previous claims where PUFAs are emulsified

7. A dairy product according to any of the previous claims wherein the preparation of the stabilized mixture of emulsified fatty acids comprising ω-3 PUFAs comprises a pre-processing of the dairy base by incorporating a concentrated solution of one or more emulsifiers with high HLB value, followed by the addition of premixture of MUFAs, ω-3 PUFAs and one or more antioxidants.

8. A dairy product according to claim 7 wherein emulsifiers with high HLB value is selected from a mixture of E472c and a lecithin with high HLB value, or any other E472 or E471 or mixtures thereof.

9. A dairy product according to claim 7 wherein the antioxidants are selected from lipidic antioxidants preferably tocopherols, lecithins, ascorbyl palmitate; or non-lipidic antioxidants preferably ascorbic acid, sodium ascorbate; or mixtures of lipidic and non-lipidic antioxidants.

10. A dairy product according to any of the previous claims where the mix of vitamins comprise one or more of the following vitamin A, vitamin B1, vitamin B2, vitamin B3, vitamin B5, vitamin B6, vitamin B8, vitamin B9, vitamin B12, vitamin C, vitamin D, vitamin E, y vitamin K.

11. A dairy product according to claim 10 where the mix of vitamins are stabilized by means of a carrier preferably lactose or maltodextrin or by a hydrosoluble antioxidant, preferably a salt of ascorbic acid.

12. A dairy product according to claim 1 wherein the thermoplastic container is made of polyethylene terephthalate.

13. A dairy product according to claim 1 or 12 wherein barrier against oxygen comprises barrier additives against oxygen selected from antioxidants or a mixture of semi-aromatic polyamides together with a catalyst and barrier against light comprises barrier additives against light such as titanium dioxide or a two layers-poliethylene terephthalate or a three layers-poliethylene terephthalate or a transparent container with an opaque sleeve.

14. A dairy product according to any of the previous claims where the folic acid or folate is present in an amount between 350µg to 550µg per 100 ml of dairy product.

15. A dairy product according to any of the previous claims where iodine is present in an amount between 150µg to 350µg per 100 ml of dairy product.

16. A dairy product according to any of the previous claims where ω-3 PUFAs are present in an amount of 0.1 g and 0.5 g per 100 ml of dairy product.

17. A dairy product according to any of the previous claims where the stabilized mix of vitamins can comprise one or more of the following vitamins in the following amounts:
- vitamin A between 100 µg to 300 µg per 100 ml,
- vitamin B1 between 1 mg to 2 mg per 100 ml,
- vitamin B2 between 0.2 mg to 0.8 mg per 100 ml,
- vitamin B3 between 4 mg to 10 mg per 100 ml,
- vitamin B5 between 0.5 mg to 1.5 mg per 100 ml,
- vitamin B6 between 1 mg to 3 mg per 100 ml,
- vitamin B8 between 20 µg to 70 µg per 100 ml,
- vitamin B12 between 0.1 µg to 0.55 µg per 100 ml,
- vitamin C between 60 mg to 180 mg per 100 ml,
- vitamin D between 2 µg to 8 µg per 100 ml,
- vitamin E between 9 mg to 15 mg per 100 ml,
- vitamin K between 50 µg to 160 µg per 100 ml.

18. A dairy product according to any of the previous claims further comprising minerals including calcium, magnesium and phosphorous.

19. A process for the preparation of a drinkable dairy product according to claim 1 comprising:
a) the addition to a dairy base of milk and water of one or more calcium scavengers in order to stabilize caseins and one or more polyols in order to stabilize whey proteins, including α-lactoalbulmin and β-lactoglobulin;
b) the incorporation to the stabilized dairy base of a) of a concentrated solution of one or more emulsifiers with high HLB value, followed by the addition of premixture of MUFAs, ω-3 PUFAs and one or more antioxidants, preferably lipidic antioxidants;
c) the addition of the folic acid or folate, the iodine and the stabilized mix of vitamins
d) the conditioning of the product in sterile conditions a thermoplastic container with a barrier against oxygen and light.

20. A process according to claim 19 where in step c) calcium, phosphorous and magnesium salts are also added.

21. A process according to claim 19 where the pH is adjusted to 6.7-6.8.

22. A process according to claim 19 where the drinkable dairy product is sterilized before or after its introduction in the thermoplastic container.

23. Use of the drinkable dairy product according to any of claims 1-18 as a nutritional supplement for women during the periods of pre-conception, pregnancy and lactation.
